# FASCICULE DE BREVET EUROPEEN

(11) **EP 2 085 620 B1**
(45) Date de publication et mention de la délivrance du brevet: **13.04.2011**
(21) Numéro de dépôt: 09151195.6
(22) Date de dépôt: 23.01.2009
(51) Int. Cl.: F04D 29/32, F01D 5/14, F02K 3/06

(54) **Compresseur de turboréacteur**
Verdichter eines Turbotriebwerks
Jet engine compressor

(30) Priorité: 30.01.2008 FR 0850565
(43) Date de publication de la demande: 05.08.2009
(73) Titulaire: SNECMA, 75015 Paris (FR)
(72) Inventeur: Aubin, Stéphan, 94700 Maisons Alfort (FR); Belmonte, Olivier, 77176 Savigny le Temple (FR)
(74) Mandataire: Boura, Olivier

(56) Documents cités:
- EP-A- 1 087 100
- EP-A- 1 126 132
- CH-A- 229 266
- US-A- 3 481 531

## Description

### Arrière-plan de l'invention

La présente invention se rapporte au domaine général des compresseurs de turboréacteur comme celui connu de EP 1 126 132 qui montre toutes les caractéristiques contenues dans le préambule de la revendication 1. Elle concerne plus précisément la soufflante (ou compresseur basse-pression) d'un turboréacteur du type à double flux.

Dans un turboréacteur à double flux, l'air est comprimé successivement dans un compresseur basse-pression et un compresseur haute-pression, puis mélangé à du carburant et brûlé dans une chambre de combustion. L'énergie extraite des gaz de combustion est prélevée et transformée en énergie mécanique dans une turbine haute-pression pour assurer l'entraînement du compresseur haute-pression et d'une turbine basse-pression. Cette dernière assure à son tour l'entraînement du compresseur basse-pression.

Le compresseur basse-pression, également appelé soufflante, d'un tel turboréacteur comporte généralement un seul étage d'aubes fixées par leur pied sur une virole qui est mobile en rotation autour d'un axe longitudinal du turboréacteur. Un carter annulaire disposé concentriquement autour de la virole définit avec cette dernière une veine annulaire pour l'écoulement de l'air traversant la soufflante.

Quant au compresseur haute-pression, il se compose généralement d'une pluralité d'étages, chaque étage étant formé d'une grille d'aubes fixes située derrière une grille d'aubes mobiles.

Une tendance actuelle chez les motoristes consiste à chercher comment réduire le nombre d'étages du compresseur basse-pression pour diminuer son encombrement et sa masse. Dans ce but, afin de ne pas pénaliser les performances du turboréacteur en termes de compression de l'air, il est nécessaire d'augmenter l'efficacité de compression et de pompage de la soufflante.

L'une des solutions connues pour accroître l'efficacité de compression et de pompage de la soufflante consiste à augmenter le rayon de la veine d'écoulement de l'air traversant la soufflante. A cet effet, on connaît par exemple le document US 6,561,761 qui décrit le principe de « creuser » la veine au niveau de la virole en formant des « cuvettes » entre les pieds d'aubes. La présence de ces cuvettes permet aux pieds d'aubes de comprimer l'air plus aisément et avec moins de pertes aérodynamiques.

Une telle modification de la veine d'écoulement de l'air permet de diminuer le nombre de Mach en entrée de soufflante et de mieux comprimer l'air en sortie, en augmentant l'effet de rayon. Cependant, le fait de creuser la veine au niveau de la virole peut avoir des conséquences préjudiciables sur le fonctionnement aérodynamique des coupes de pieds d'aubes, notamment dans la zone de recompression située du côté extrados des aubes.

### Objet et résumé de l'invention

La présente invention a donc pour but principal de pallier de tels inconvénients en proposant une géométrie de virole, en particulier de virole de soufflante, permettant d'accroître davantage l'efficacité de compression et de pompage du compresseur en particulier du compresseur basse-pression, d'un turboréacteur.

Ce but est atteint grâce à un compresseur de turboréacteur, comportant une virole mobile en rotation autour d'un axe longitudinal du compresseur, et une pluralité d'aubes fixées chacune par leur pied sur la virole et espacées circonférentiellement l'une de l'autre de façon à définir entre les aubes des passages d'écoulement d'un flux gazeux traversant le compresseur, chaque aube comportant une surface intrados et une surface extrados opposée circonférentiellement à la surface intrados, les surfaces intrados et extrados s'étendant axialement entre un bord d'attaque et un bord de fuite de l'aube, caractérisé en ce que la virole présente au niveau de chaque pied d'aube :
une rampe extrados attenante à la surface extrados de l'aube et s'étendant axialement depuis le bord de fuite de l'aube jusqu'au-delà de son bord d'attaque ;
une rampe intrados attenante à la surface intrados de l'aube et s'étendant axialement depuis le bord de fuite de l'aube jusqu'au-delà de son bord d'attaque ;
les rampes intrados et extrados se rejoignant en amont du bord d'attaque de l'aube pour former un bossage en saillie, ledit bossage présentant un profil vrillé autour de l'axe de la virole de façon à forcer le flux gazeux s'écoulant dans chaque passage d'écoulement à contourner le pied d'aube essentiellement par le côté extrados de celui-ci ; et
la rampe extrados présentant entre le bord d'attaque et le bord de fuite de l'aube un profil incliné par rapport à la surface externe de la virole de façon à dévier le flux gazeux s'écoulant dans le passage d'écoulement correspondant du côté extrados de l'aube vers la surface intrados de l'aube adjacente.

Par la présence du bossage en amont de chaque pied d'aube, le flux gazeux entrant dans le compresseur est forcé à contourner le pied d'aube en passant principalement par le côté extrados de celui-ci (plutôt que par son côté intrados). Le flux gazeux est alors accéléré par dépression puis dévié vers la surface intrados de l'aube adjacente grâce à la présence de la rampe extrados. L'efficacité de compression et de pompage du compresseur s'en trouve ainsi améliorée.

Selon une disposition de l'invention, chaque rampe extrados s'étend circonférentiellement sur une distance qui augmente progressivement depuis le bord d'attaque jusqu'au bord de fuite de l'aube correspondante.

Selon une disposition avantageuse, l'inclinaison du profil de chaque rampe extrados diminue progressivement depuis le bord d'attaque jusqu'au bord de fuite de l'aube correspondante.

Selon encore une autre disposition avantageuse, le profil du bossage associé à une aube est vrillé dans le sens de rotation de la virole autour de l'axe longitudinal du compresseur.

Selon encore une autre disposition avantageuse, l'extrémité amont du bossage associé à une aube est sensiblement aligné axialement avec le bord d'attaque d'une aube adjacente.

Chaque rampe intrados peut présenter entre le bord d'attaque et le bord de fuite de l'aube correspondante un profil incliné par rapport à la surface externe de la virole. Dans ce cas, l'inclinaison du profil de chaque rampe intrados peut augmenter progressivement depuis le bord d'attaque jusqu'au bord de fuite de l'aube correspondante et chaque rampe intrados peut s'étendre circonférentiellement sur une distance qui diminue progressivement depuis le bord d'attaque jusqu'au bord de fuite de l'aube correspondante.

L'invention a également pour objet un turboréacteur comportant un compresseur tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en coupe longitudinale d'une soufflante selon un mode de réalisation de l'invention ;
- la figure 2 est une vue selon II de la figure 1 ;
- la figure 3 est une vue de profil de pieds d'aubes adjacentes de la soufflante de la figure 1 ; et
- la figure 4 est une vue partielle et en développé du profil de la virole selon les lignes de coupe transversale A à G de la figure 3.

### Description détaillée d'un mode de réalisation

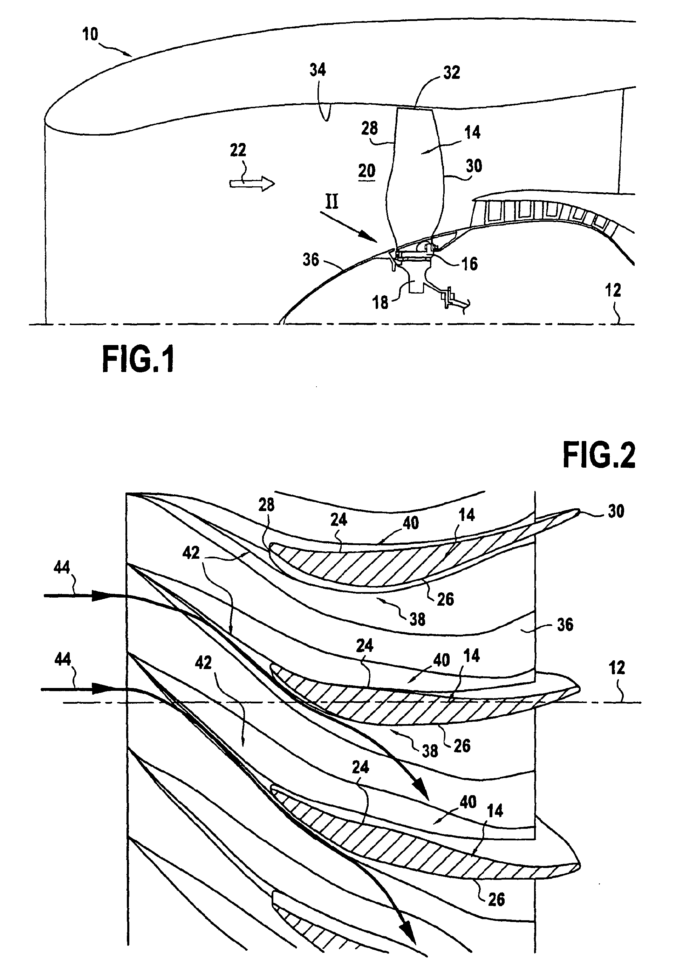

La figure 1 représente partiellement une soufflante 10 (ou compresseur basse-pression) d'un turboréacteur qui est axisymétrique par rapport à son axe longitudinal 12.

La soufflante 10 est située à l'entrée du turboréacteur. Elle comporte une pluralité d'aubes 14 qui sont chacune fixées de façon bien connue en soi par leur pied 16 sur un disque 18 mobile en rotation autour de l'axe longitudinal 12.

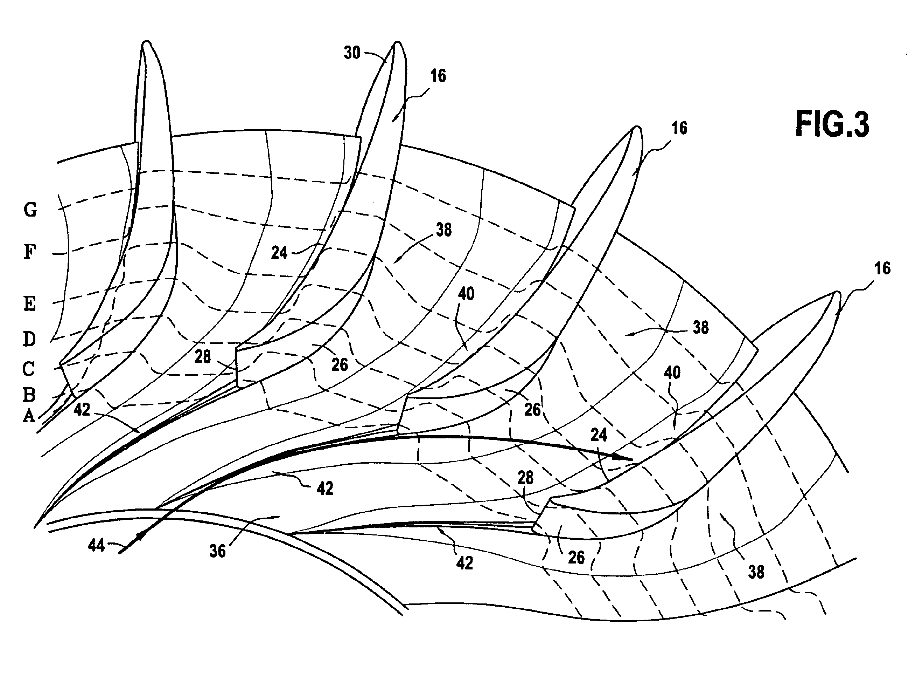

Comme représenté sur les figures 2 et 3, les aubes 14 de la soufflante sont régulièrement espacées l'une de l'autre selon une direction circonférentielle de façon à définir entre elles des portions d'un passage (ou veine) annulaire 20 d'écoulement d'un flux d'air 22 traversant la soufflante 10.

De façon connue en soi, la rotation du disque 18 et des aubes 14 de la soufflante apporte de l'énergie à l'air empruntant le passage 20 de la soufflante et augmente sa pression en diminuant sa vitesse relative d'écoulement.

Chaque aube 14 comporte une surface intrados 24 et une surface extrados 26 opposée circonférentiellement à la surface intrados (figure 2). Les surfaces intrados et extrados s'étendent, d'une part axialement entre un bord d'attaque 28 et un bord de fuite de l'aube 30, et d'autre part radialement entre leur pied 16 et un sommet 32.

Par ailleurs, chaque aube 14 présente un profil vrillé entre son pied 16 et son sommet 32 qui est optimisé pour obtenir la meilleure efficacité de pompage et de compression de l'air.

Le passage 20 d'écoulement du flux d'air au travers de la soufflante est délimité radialement, d'une part à l'extérieur par la surface interne d'un carter annulaire 34 centré sur l'axe longitudinal 12 et entourant les aubes 14, et d'autre part à l'intérieur par la surface externe d'une virole 36 solidaire du disque 18 et centrée sur l'axe longitudinal 12.

La virole 36 peut être constituée d'une pluralité de plates-formes qui sont solidaires chacune d'un pied d'aube 16 et qui, lorsque mises bout à bout circonférentiellement, définissent une surface annulaire sensiblement continue.

Selon l'invention, au niveau de chaque pied d'aube 16, la virole 36 présente une rampe extrados 38 qui est attenante à la surface extrados 26 de l'aube correspondante et une rampe intrados 40 qui est attenante à la surface intrados 24 de l'aube.

Les rampes intrados et extrados peuvent être obtenues par déformation de la virole 36. Elles s'étendent chacune axialement (c'est-à-dire selon l'axe longitudinal 12) d'aval en amont depuis le bord de fuite 30 de l'aube jusqu'au-delà de son bord d'attaque 28.

Par ailleurs, pour chaque aube 14, les rampes intrados 38 et extrados 40 se rejoignent en amont du bord d'attaque 28 de l'aube pour former un bossage 42 qui est en saillie radialement dans le passage d'écoulement 20.

Ce bossage 42 ainsi défini présente un profil qui est vrillé autour de l'axe 12, tous les bossages de la virole 36 étant vrillés dans un même sens (qui correspond de préférence, au sens de rotation de la virole autour de l'axe 12).

Le vrillage du profil de chaque bossage 42 est réalisé de telle façon à forcer le flux d'air entrant dans le passage d'écoulement 20 au niveau des pieds d'aube à contourner chaque pied d'aube essentiellement par le côté extrados de celle-ci (plutôt que par son côté intrados).

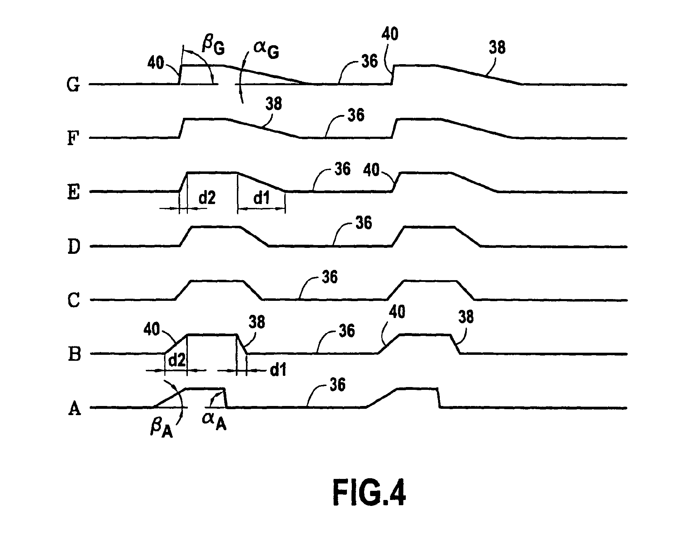

Par ailleurs, chaque rampe extrados 38 présente, entre le bord d'attaque 28 et le bord de fuite 30 de l'aube correspondante, un profil qui est incliné par rapport à la surface externe de la virole 36. Cette inclinaison (α_{A} à α_{G}) est notamment visible sur la figure 4.

L'inclinaison de la rampe extrados permet au flux d'air s'écoulant dans le passage d'écoulement délimité circonférentiellement entre la surface extrados 26 de l'aube correspondante et la surface intrados 24 de l'aube adjacente, et plus précisément le long du côté extrados de l'aube, d'être dévié vers la surface intrados de l'aube adjacente.

Au niveau de chaque pied d'aube 16, le mouvement de l'air entrant dans le passage d'écoulement 20 est schématisé par les flèches 44 représentées sur les figures 2 et 3. L'air pénètre dans le passage d'écoulement selon une direction sensiblement axiale. Dans l'intervalle situé entre l'extrémité amont de la virole 36 et le bord d'attaque 28 des aubes, l'air s'écoulant contre la surface externe de la virole est forcé à contourner chaque pied d'aube en passant principalement par le côté extrados de celui-ci. En aval du bord d'attaque 28 de chaque aube, l'inclinaison de la rampe extrados 38 permet d'accélérer le flux d'air par dépression et de le dévier vers la surface intrados de l'aube adjacente.

Selon une caractéristique avantageuse de l'invention, l'inclinaison du profil de chaque rampe extrados 38 diminue progressivement depuis le bord d'attaque 28 jusqu'au bord de fuite 30 de l'aube correspondante.

Sur la figure 4, l'inclinaison du profil des rampes extrados par rapport à la surface externe de la virole passe ainsi d'un angle α_{A} proche de 90° (la ligne A correspondant à une coupe transversale au niveau du bord d'attaque des aubes) à angle α_{G} proche de 0° (la ligne G correspondant à la coupe transversale la plus en aval).

Selon une autre caractéristique avantageuse de l'invention, chaque rampe extrados 38 s'étend (selon la direction circonférentielle) sur une distance d1 qui augmente progressivement depuis le bord d'attaque 28 jusqu'au bord de fuite 30 de l'aube correspondante (cette caractéristique est également visible sur la figure 4).

Ces deux caractéristiques permettent ainsi de soulager la recompression de l'air après que le flux d'air ait été accéléré en aval du bord d'attaque 28 de chaque aube.

Selon encore une autre caractéristique avantageuse de l'invention, l'extrémité amont du bossage 42 associé à une aube 14 est sensiblement aligné axialement (c'est-à-dire selon l'axe 12) avec le bord d'attaque 28 d'une aube adjacente.

Cette caractéristique qui est notamment visible sur la figure 2 permet de « boucher » au maximum le passage d'écoulement de l'air situé entre le côté extrados d'une aube et le côté intrados de l'aube adjacente et ainsi de forcer davantage l'air à contourner les pieds d'aube par leur côté extrados.

Il est également à noter que l'épaisseur des bossages 42 diminue progressivement depuis le bord d'attaque 28 des aubes jusqu'à disparaître au niveau de l'extrémité amont de la virole 36.

Différents aspects des rampes intrados 40 associées aux aubes 14 sont décrits ci-dessous.

Comme pour les rampes extrados, chaque rampe intrados 40 présente entre le bord d'attaque 28 et le bord de fuite 30 de l'aube correspondante un profil qui est incliné par rapport à la surface externe de la virole 36 de façon à augmenter la section de passage.

Par ailleurs, à l'inverse des rampes extrados, l'inclinaison du profil de chaque rampe intrados 40 augmente de préférence progressivement depuis le bord d'attaque 28 jusqu'au bord de fuite 30 de l'aube correspondante. Ainsi, l'inclinaison du profil des rampes intrados par rapport à la surface externe de la virole passe d'un angle β_{A} proche de 0° à angle β_{G} proche de 90° (figure 4).

Toujours à l'inverse des rampes extrados, chaque rampe intrados 40 s'étend de préférence selon la direction circonférentielle sur une distance d2 qui diminue progressivement depuis le bord d'attaque 28 jusqu'au bord de fuite 30 de l'aube correspondante. Cette caractéristique a pour but de comprimer davantage sur le côté intrados de l'aube.

## Revendications

1. Compresseur de turboréacteur, comportant :
une virole (36) mobile en rotation autour d'un axe longitudinal (12) du compresseur ; et
une pluralité d'aubes (14) fixées chacune par leur pied (16) sur la virole et espacées circonférentiellement l'une de l'autre de façon à définir entre les aubes des passages d'écoulement d'un flux gazeux traversant le compresseur ;
chaque aube (14) comportant une surface intrados (24) et une surface extrados (26) opposée circonférentiellement à la surface intrados, les surfaces intrados et extrados s'étendant axialement entre un bord d'attaque (28) et un bord de fuite (30) de l'aube ; la virole présentant au niveau de chaque pied d'aube :
une rampe extrados (38) attenante à la surface extrados de l'aube et s'étendant axialement depuis le bord de fuite de l'aube jusqu'au-delà de son bord d'attaque ;
une rampe intrados (40) attenante à la surface intrados de l'aube et s'étendant axialement depuis le bord de fuite de l'aube jusqu'au-delà de son bord d'attaque ;
les rampes intrados et extrados se rejoignant en amont du bord d'attaque de l'aube pour former un bossage (42) en saillie, ledit bossage présentant un profil vrillé autour de l'axe (12) de la virole de façon à forcer le flux gazeux s'écoulant dans chaque passage d'écoulement à contourner le pied d'aube (16) essentiellement par le côté extrados de celui-ci ;
la rampe extrados (38) présentant entre le bord d'attaque et le bord de fuite de l'aube un profil incliné par rapport à la surface externe de la virole de façon à dévier le flux gazeux s'écoulant dans le passage d'écoulement correspondant du côté extrados de l'aube vers la surface intrados de l'aube adjacente ; **caractérisé en ce que**
la rampe extrados (38) s'étend circonférentiellement sur une distance (d1) qui augmente progressivement depuis le bord d'attaque (28) jusqu'au bord de fuite (30) de l'aube correspondante.

2. Compresseur selon la revendication 1, dans lequel l'inclinaison du profil de chaque rampe extrados (38) diminue progressivement depuis le bord d'attaque (28) jusqu'au bord de fuite (30) de l'aube correspondante.

3. Compresseur selon l'une des revendications 1 et 2, dans lequel le profil du bossage (42) associé à une aube est vrillé dans le sens de rotation de la virole (36) autour de l'axe longitudinal (12) du compresseur.

4. Compresseur selon l'une quelconque des revendications 1 à 3, dans lequel l'extrémité amont du bossage (42) associé à une aube est sensiblement aligné axialement avec le bord d'attaque (28) d'une aube adjacente.

5. Compresseur selon l'une quelconque des revendications 1 à 4, dans lequel chaque rampe intrados (24) présente entre le bord d'attaque (28) et le bord de fuite (30) de l'aube correspondante un profil incliné par rapport à la surface externe de la virole (36).

6. Compresseur selon la revendication 5, dans lequel l'inclinaison du profil de chaque rampe intrados (24) augmente progressivement depuis le bord d'attaque (28) jusqu'au bord de fuite (30) de l'aube correspondante.

7. Compresseur selon l'une des revendications 5 et 6, dans lequel chaque rampe intrados (24) s'étend circonférentiellement sur une distance (d2) qui diminue progressivement depuis le bord d'attaque jusqu'au bord de fuite de l'aube correspondante.

8. Compresseur selon l'une quelconque des revendications 1 à 7, **caractérisée en ce qu'**il constitue une soufflante (10) de turboréacteur.

9. Turboréacteur **caractérisé en ce qu'**il comporte un compresseur selon l'une quelconque des revendications 1 à 8.

## Claims

1. A turbojet compressor comprising:
a shroud (36) rotatable about a longitudinal axis (12) of the compressor; and
a plurality of blades (14), each fastened via a root (16) to the shroud and circumferentially spaced apart from one another so as to define between them flow passages for a gas stream passing through compressor;
each blade (14) having a pressure-side surface (24) and a suction-side surface (26) circumferentially opposite from its pressure-side surface, the pressure-side and suction-side surfaces extending axially between a leading edge (28) and a trailing edge (30) of the blade;
the shroud presenting level with each blade root:
a suction-side ramp (38) adjoining the suction-side surface of the blade and extending axially from the trailing edge of the blade to beyond its leading edge;
a pressure-side ramp (40) adjoining the pressure-side surface of the blade and extending axially from the trailing edge of the blade to beyond its leading edge;
the pressure-side and suction-side ramps joining together upstream from the leading edge of the blade to form a projection (42), said projection presenting a profile that is twisted about the axis (12) of the shroud so as to force the gas stream flowing in each flow passage to go round the blade root (16) essentially via the suction-side thereof;
the suction-side ramp (38) presenting, between the leading edge and the trailing edge of the blade, a profile that is inclined relative to the outside surface of the shroud so as to deflect the gas stream flowing in the corresponding flow passage from the suction-side surface of the blade towards the pressure-side surface of the adjacent blade; **characterized in that**
the suction-side ramp (38) extends circumferentially over a distance (d1) that increases progressively from the leading edge (28) to the trailing edge (30) of the corresponding blade.

2. A compressor according to claim 1, wherein the inclination of the profile of each suction-side ramp (38) decreases progressively from the leading edge (28) to the trailing edge (30) of each corresponding blade.

3. A compressor according to claim 1 or claim 2, wherein the profile of the projection (42) associated with a blade is twisted about the longitudinal axis (12) of the compressor in the direction of rotation of the shroud (36).

4. A compressor according to any one of claims 1 to 3, wherein the upstream end of the projection (42) associated with a blade is substantially in axial alignment with the leading edge (28) of an adjacent blade.

5. A compressor according to any one of claims 1 to 4, wherein each pressure-side ramp (24) presents, between the leading edge (29) and the trailing edge (30) of the corresponding blade, a profile that is inclined relative to the outside surface of the shroud (36).

6. A compressor according to claim 5, wherein the inclination of the profile of each pressure-side ramp (24) increases progressively from the leading edge (28) to the trailing edge (30) of the corresponding blade.

7. A compressor according to claim 5 or claim 6, wherein each pressure-side ramp (24) extends circumferentially over a distance (d2) that decreases progressively from the leading edge to the trailing edge of the corresponding blade.

8. A compressor according to any one of claims 1 to 7, **characterized in that** it constitutes a turbojet fan (10).

9. A turbojet, **characterized in that** it includes a compressor according to any one of claims 1 to 8.

## Patentansprüche

1. Verdichter eines Turbostrahltriebwerks, umfassend:
einen Ring (36), der um eine Längsachse (12) des Verdichters drehbeweglich ist, und
eine Vielzahl von Schaufeln (14), die jeweils über ihren Fuß (16) an dem Ring befestigt und in Umfangsrichtung voneinander beabstandet sind, um zwischen den Schaufeln Strömungsdurchlässe für einen den Verdichter durchquerenden Gasstrom zu definieren,
wobei jede Schaufel (14) eine Vorderseite (24) und eine der Vorderseite in Umfangsrichtung gegenüberliegende Rückseite (26) aufweist, wobei die Vorder- und die Rückseite sich axial zwischen einer Eintrittskante (28) und einer Austrittskante (30) der Schaufel erstrecken,
wobei der Ring im Bereich eines jeden Schaufelfußes aufweist:
eine rückseitige Rampe (38), welche an die Rückseite der Schaufel angrenzt und sich axial von der Austrittskante der Schaufel bis jenseits ihrer Eintrittskante erstreckt,
eine vorderseitige Rampe (40), welche an die Vorderseite der Schaufel angrenzt und sich axial von der Austrittskante der Schaufel bis jenseits ihrer Eintrittskante erstreckt,
wobei die vorderseitige und die rückseitige Rampe vor der Eintrittskante der Schaufel zusammentreffen, um einen vorspringenden Ansatz (42) zu bilden, wobei der Ansatz ein um die Achse (12) des Rings gewundenes Profil aufweist, um den in jeden Strömungsdurchlaß strömenden Gasstrom dazu zu bringen, den Schaufelfuß (16) im wesentlichen über dessen Rückseite zu umgehen,
wobei die rückseitige Rampe (38) zwischen der Eintrittskante und der Austrittskante der Schaufel ein gegenüber der Außenseite des Rings geneigtes Profil aufweist, um den in den entsprechenden Strömungsdurchlaß auf der Rückseite der Schaufel strömenden Gasstrom zur Vorderseite der benachbarten Schaufel abzulenken,
**dadurch gekennzeichnet, daß**
die rückseitige Rampe (38) sich in Umfangsrichtung über eine Strecke (d1) erstreckt, die von der Eintrittskante (28) bis zur Austrittskante (30) der entsprechenden Schaufel schrittweise zunimmt.

2. Verdichter nach Anspruch 1, wobei die Neigung des Profils einer jeden rückseitigen Rampe (38) von der Eintrittskante (28) bis zur Austrittskante (30) der entsprechenden Schaufel schrittweise abnimmt.

3. Verdichter nach einem der Ansprüche 1 und 2, wobei das Profil des einer Schaufel zugeordneten Ansatzes (42) in Rotationsrichtung des Rings (36) um die Längsachse (12) des Verdichters gewunden ist.

4. Verdichter nach einem der Ansprüche 1 bis 3, wobei das vordere Ende des einer Schaufel zugeordneten Buckels (42) mit der Eintrittskante (28) einer benachbarten Schaufel im wesentlichen axial ausgerichtet ist.

5. Verdichter nach einem der Ansprüche 1 bis 4, wobei jede vorderseitige Rampe (24) zwischen der Eintrittskante (28) und der Austrittskante (30) der entsprechenden Schaufel ein gegenüber der Außenseite des Rings (36) geneigtes Profil aufweist.

6. Verdichter nach Anspruch 5, wobei die Neigung des Profils einer jeden vorderseitigen Rampe (24) von der Eintrittskante (28) bis zur Austrittskante (30) der entsprechenden Schaufel schrittweise zunimmt.

7. Verdichter nach einem der Ansprüche 5 und 6, wobei jede vorderseitige Rampe (24) sich in Umfangsrichtung über eine Strecke (d2) erstreckt, die von der Eintrittskante bis zur Austrittskante der entsprechenden Schaufel schrittweise abnimmt.

8. Verdichter nach einem der Ansprüche 1 bis 7, **dadurch gekennzeichnet, daß** er ein Turbostrahltriebwerksgebläse (10) bildet.

9. Turbostrahltriebwerk, **dadurch gekennzeichnet, daß** es einen Verdichter nach einem der Ansprüche 1 bis 8 umfaßt.
